# EUROPEAN PATENT APPLICATION

(11) **EP 4 527 534 A1**
(43) Date of publication of application: **26.03.2025**
(21) Application number: 23831214.4
(22) Date of filing: 20.06.2023
(51) Int. Cl.: B23K 9/04, B23K 9/032, B33Y 10/00, B33Y 30/00, B33Y 50/02

(54) **METHOD FOR CONTROLLING ADDITIVE MANUFACTURING DEVICE, CONTROL DEVICE, AND PROGRAM**

(30) Priority: 30.06.2022 JP 2022106144
(71) Applicant: KABUSHIKI KAISHA KOBE SEIKO SHO (KOBE STEEL, LTD.), Hyogo 651-8585 (JP)
(72) Inventor: SHINOZAKI Takahiro, Nishi-ku, Kobe-shi, Hyogo 651-2271 (JP); HUANG Shuo, Nishi-ku, Kobe-shi, Hyogo 651-2271 (JP)
(74) Representative: Müller-Boré & Partner Patentanwälte PartG mbB
(86) International application number: PCT/JP2023/022824
(87) International publication number: WO 2024/004768

(57) **Abstract**

A design value of a bead shape and an additive condition of welding beads are acquired. A shape profile including an opening portion is obtained by measuring shapes of the opening portion and a periphery of the opening portion defined between the welding beads formed based on the additive condition or between the welding bead and a peripheral member. A space amount of the opening portion and a representative position of the opening portion are specified according to the shape profile. Whether the opening portion is closed is determined based on at least one of a comparison between the space amount and the design value of the bead shape, a comparison between information on the representative position and a target position of the welding bead included in the additive condition, and whether a penetration bead is formed, for a closing path for closing the opening portion. The additive condition of the closing path is corrected when it is determined that the opening portion is not capable of being closed.

## Description

### TECHNICAL FIELD

The present invention relates to a control method and a control device for an additive manufacturing device, and a program.

### BACKGROUND ART

In recent years, there has been an increasing need for manufacturing a component by additive manufacturing using a 3D printer, and research and development have been advanced toward the practical use of building using a metal material. For example, Patent Literature 1 discloses an additive manufacturing device that builds a three-dimensional structure by depositing welding beads to be formed by melting a metal welding wire. In the additive manufacturing device of Patent Literature 1, a measurement illumination unit emits illumination light, a cross-sectional height distribution of a manufactured object is calculated based on a detection result of reflected light, and a width of the manufactured object is calculated based on the cross-sectional height distribution. Processing conditions are controlled according to the width of the manufactured object.

### CITATION LIST

### PATENT LITERATURE

Patent Literature 1: JP6896193B

### SUMMARY OF INVENTION

### TECHNICAL PROBLEM

Here, in the building made by depositing the welding beads, depending on a building shape, the horizontal additive in which the welding beads are deposited in a horizontal direction or the building in an overhang shape may be required. In such building, a size of the welding bead may differ between an additive plan and an actual bead due to, for example, the burn-through of a welding bead. In this case, when the welding beads are joined to each other, or the welding bead and another member are joined to each other after the horizontal additive and the building in an overhang shape, a width (space amount at the time of closing) required for the welding bead on the closing path for closing a joint portion changes along a bead longitudinal direction. When the closing is performed in such a state, a difference in quality occurs for each location due to a difference in the space amount, which causes a problem in terms of strength and quality control.

Therefore, an object of the present invention is to provide a control method and a control device for an additive manufacturing device and a program capable of managing a space amount required for a closing path and automatically setting appropriate welding conditions for the space amount.

### SOLUTION TO PROBLEM

The present invention includes the following constitutions.
(1) A control method for an additive manufacturing device that includes a manipulator causing a welding torch to move and that is configured to build a manufactured object by depositing welding beads to be formed at a tip end of the welding torch, the control method including:
   acquiring a design value of a bead shape and an additive condition of the welding beads to be formed by moving the welding torch;
   obtaining a shape profile including an opening portion by measuring shapes of the opening portion and a periphery of the opening portion defined between the welding beads formed based on the additive condition or between the welding bead and a peripheral member;
   specifying a space amount indicating a size of a space of the opening portion and a representative position of the opening portion according to the shape profile;
   determining whether the opening portion is closed based on at least one of a comparison between the space amount and the design value of the bead shape, a comparison between information on the representative position and a target position of the welding bead included in the additive condition, and whether a penetration bead is formed, for a closing path for closing the opening portion with a welding bead to be formed based on the additive condition; and
   correcting the additive condition of the closing path when it is determined that the opening portion is not capable of being closed by the closing path.
(2) A control device for an additive manufacturing device that includes a manipulator causing a welding torch to move and that is configured to build a manufactured object by depositing welding beads to be formed at a tip end of the welding torch, the control device including:
   a condition acquisition unit configured to acquire a design value of a bead shape and an additive condition of the welding beads to be formed by moving the welding torch;
   a profile measurement unit configured to obtain a shape profile including an opening portion by measuring shapes of the opening portion and a periphery of the opening portion defined between the welding beads formed based on the additive condition or between the welding bead and a peripheral member;
   a specifying unit configured to specify a space amount indicating a size of a space of the opening portion and a representative position of the opening portion according to the shape profile;
   a determination unit configured to determine whether the opening portion is closed based on at least one of a comparison between the space amount and the design value of the bead shape, a comparison between information on the representative position and a target position of the welding bead included in the additive condition, and whether a penetration bead is formed, for a closing path for closing the opening portion with a welding bead to be formed based on the additive condition; and
   a correction unit configured to correct the additive condition of the closing path when it is determined that the opening portion is not capable of being closed by the closing path.
(3) A program for executing a control procedure for an additive manufacturing device that includes a manipulator causing a welding torch to move and that is configured to build a manufactured object by depositing welding beads to be formed at a tip end of the welding torch, the program causing a computer to execute:
   a procedure of acquiring a design value of a bead shape and an additive condition of the welding beads to be formed by moving the welding torch;
   a procedure of obtaining a shape profile including an opening portion by measuring shapes of the opening portion and a periphery of the opening portion defined between the welding beads formed based on the additive condition or between the welding bead and a peripheral member;
   a procedure of specifying a space amount indicating a size of a space of the opening portion and a representative position of the opening portion according to the shape profile;
   a procedure of determining whether the opening portion is closed based on at least one of a comparison between the space amount and the design value of the bead shape, a comparison between information on the representative position and a target position of the welding bead included in the additive condition, and whether a penetration bead is formed, for a closing path for closing the opening portion with a welding bead to be formed based on the additive condition; and
   a procedure of correcting the additive condition of the closing path when it is determined that the opening portion is not capable of being closed by the closing path.

### ADVANTAGEOUS EFFECTS OF INVENTION

According to the present invention, it is possible to manage the space amount required for the closing path and automatically set appropriate welding conditions for the space amount.

### BRIEF DESCRIPTION OF DRAWINGS

[FIG. 1] FIG. 1 is a schematic diagram illustrating an overall configuration of an additive manufacturing device.
[FIG. 2] FIG. 2 is a functional block diagram of a control device.
[FIG. 3A] FIG. 3A is a schematic view illustrating an opening portion when a partition wall having an internal space is formed by depositing welding beads.
[FIG. 3B] FIG. 3B is a schematic view illustrating an opening portion when a partition wall having an internal space is formed by depositing welding beads.
[FIG. 4] FIG. 4 is a plan view of the opening portion illustrated in FIG. 3A.
[FIG. 5] FIG. 5 is a flowchart illustrating a procedure for closing an opening portion to be formed by depositing welding beads with a welding bead on a closing path.
[FIG. 6] FIG. 6 is a diagram schematically illustrating a state of measuring a shape profile.
[FIG. 7] FIG. 7 is a diagram illustrating detection profiles of detected reflected light.
[FIG. 8] FIG. 8 is a graph illustrating a shape profile measured by a profile measurement unit using a shape detection unit.
[FIG. 9] FIG. 9 is a diagram illustrating the opening portion and the closing path for closing the opening portion.
[FIG. 10A] FIG. 10A is a diagram illustrating a penetration bead, and is a schematic cross-sectional view in a case in which no penetration bead is formed at a position of the closing path.
[FIG. 10B] FIG. 10B is a diagram illustrating a penetration bead, and is a schematic cross-sectional view in a case in which a penetration bead is formed at the position of the closing path.
[FIG. 11] FIG. 11 is a photograph of a cross section of a weld in a case in which a weld failure having a notched shape occurs in the closing path.

### DESCRIPTION OF EMBODIMENTS

Hereinafter, embodiments according to the present invention will be described in detail with reference to the drawings. An additive manufacturing device shown here is an example, and may have another configuration as long as the device includes a manipulator that holds a welding torch and that builds a manufactured object by depositing welding beads to be formed at a tip end of the welding torch based on set additive conditions.

### <Configuration of Additive Manufacturing Device>

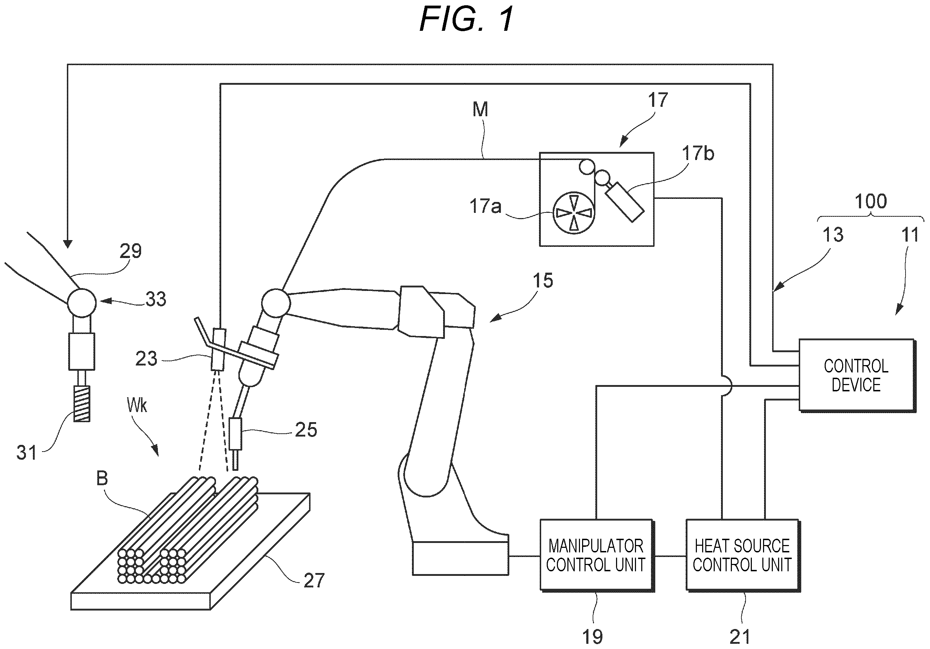

FIG. 1 is a schematic diagram illustrating an overall configuration of the additive manufacturing device.

The additive manufacturing device 100 includes a control device 11 and a manufacturing unit 13. The manufacturing unit 13 includes a manipulator 15, a filler metal supply unit 17, a manipulator control unit 19, a heat source control unit 21, and a shape detection unit 23.

The manipulator control unit 19 controls the manipulator 15 and the heat source control unit 21. A controller (not illustrated) is connected to the manipulator control unit 19, and an operator can instruct any operation of the manipulator control unit 19 via the controller.

The manipulator 15 is, for example, an articulated robot, and a filler metal M is supported by a welding torch 25 provided on a tip end shaft of the manipulator 15 so as to be continuously supplied. The welding torch 25 holds the filler metal M in a state of protruding from a tip end thereof. A position and posture of the welding torch 25 can be freely set three-dimensionally within a range of degrees of freedom of a robot arm constituting the manipulator 15. The manipulator 15 preferably has six or more degrees of freedom, and is preferably capable of freely changing an axial direction of a heat source at a tip end thereof. The manipulator 15 may be in various forms, such as an articulated robot having four or more axes illustrated in FIG. 1 or a robot having angle adjustment mechanisms on two or more orthogonal axes.

The welding torch 25 includes a shield nozzle (not illustrated), and is supplied with shield gas from the shield nozzle. The shield gas blocks the atmosphere, and prevents oxidation, nitridation, and the like of molten metal during welding, thereby reducing welding failures. An arc welding method used in this configuration may be any one of a consumable electrode type such as coated arc welding or carbon dioxide gas arc welding, and a non-consumable electrode type such as the Tungsten Inert Gas (TIG) welding or plasma arc welding, and is appropriately selected depending on an object to be built. Here, gas metal arc welding will be described as an example. In the case of the consumable electrode type, a contact tip is disposed inside the shield nozzle, and the filler metal M to which a current is supplied is held by the contact tip. The welding torch 25 generates an arc from a tip end of the filler metal M in a shield gas atmosphere while holding the filler metal M.

The filler metal supply unit 17 supplies the filler metal M toward the welding torch 25. The filler metal supply unit 17 includes a reel 17a around which the filler metal M is wound, and a feeding mechanism 17b that feeds the filler metal M from the reel 17a. The filler metal M is fed to the welding torch 25 while being fed forward or backward by the feeding mechanism 17b as necessary. The feeding mechanism 17b is not limited to a push type disposed on a filler metal supply unit 17 side to push out the filler metal M, and may be a pull type or a push-pull type disposed on the robot arm or the like.

The heat source control unit 21 is a welding power source that supplies electric power required for welding by the manipulator 15. The heat source control unit 21 adjusts a welding current and a welding voltage to be supplied at the time of forming beads by melting and solidifying the filler metal M. In addition, a filler metal feeding speed of the filler metal supply unit 17 is adjusted in conjunction with welding conditions such as the welding current and the welding voltage set by the heat source control unit 21.

A heat source for melting the filler metal M is not limited to the above-described arc. For example, a heat source using another method such as a heating method using both an arc and a laser, a heating method using plasma, or a heating method using an electron beam or a laser may be used. In the case of heating by an electron beam or a laser, a heating amount can be more finely controlled, and a state of a bead to be formed can be more appropriately maintained, thereby contributing to further improvement in quality of an additive structure. In addition, a material of the filler metal M is not particularly limited, and for example, types of the filler metal M to be used may be different according to properties of a manufactured object Wk such as mild steel, high-tensile steel, aluminum, aluminum alloy, nickel, and nickel-base alloy.

The shape detection unit 23 is provided on or in the vicinity of the tip end shaft of the manipulator 15 and sets the vicinity of the tip end of the welding torch 25 as a measurement region. The shape detection unit 23 may be another detection unit provided at a position different from the welding torch 25.

The shape detection unit 23 of this configuration is moved together with the welding torch 25 by the driving of the manipulator 15 and measures shapes of welding beads B and a portion serving as a base when the welding beads B are formed. As the shape detection unit 23, for example, a laser displacement sensor that acquires reflected light of irradiated laser light as height information can be used. In addition, other detection units such as a camera for three-dimensional shape measurement may be used as the shape detection unit 23.

The control device 11 collectively controls the above-described units. The control device 11 is implemented by, for example, hardware using an information processing device such as a personal computer (PC). Each function of the control device 11 is implemented by a processor such as a central processing unit (CPU) or a micro processor unit (MPU) or a control device such as a dedicated circuit reading a program having a specific function stored in a storage device (not illustrated) and executing the program. Examples of the storage device include a memory such as random access memory (RAM) which is a volatile storage area and read only memory (ROM) which is a non-volatile storage area, and a storage such as hard disk drive (HDD) and solid state drive (SSD). The control device 11 may be another computer remotely connected to the additive manufacturing device 100 via a network or the like in addition to the above-described embodiment.

The additive manufacturing device 100 having the above-described configuration operates according to a manufacturing program created based on a manufacturing plan of the manufactured object Wk. The manufacturing program includes a large number of command codes, and is created based on an appropriate algorithm according to various conditions such as a shape, a material, and a heat input amount of the manufactured object Wk. When the filler metal M to be fed is melted and solidified while moving the welding torch 25 according to the manufacturing program, linear welding beads B which are molten and solidified bodies of the filler metal M are formed on a base 27. That is, the manipulator control unit 19 drives the manipulator 15 and the heat source control unit 21 based on a predetermined manufacturing program provided from the control device 11. The manipulator 15 forms the welding beads B by moving the welding torch 25 while melting the filler metal M with an arc, according to a command from the manipulator control unit 19. By sequentially forming and depositing the welding beads B in this manner, the manufactured object Wk having a desired shape can be obtained.

The control device 11 may have a function of outputting a drive signal for performing cutting or polishing of the welding bead B at a predetermined timing to a machining device 33 having a tool 31 for cutting or polishing, such as an end mill or a drill, on a tip end shaft 29.

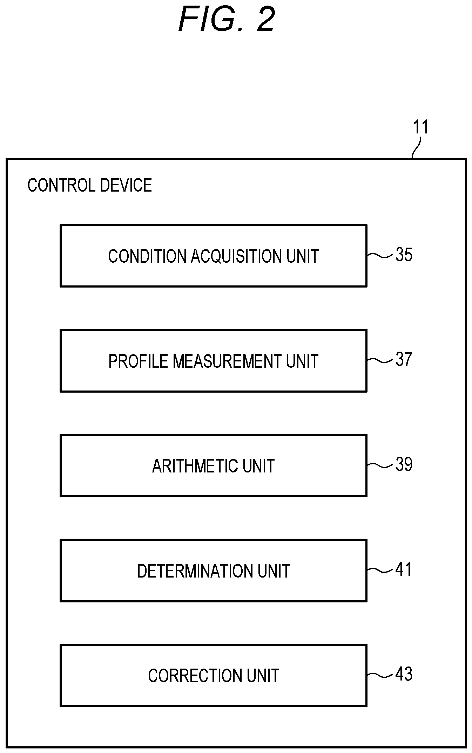

FIG. 2 is a functional block diagram of the control device 11. The control device 11 includes a condition acquisition unit 35, a profile measurement unit 37, an arithmetic unit 39, a determination unit 41, and a correction unit 43. The function of each unit described above will be described in detail later.

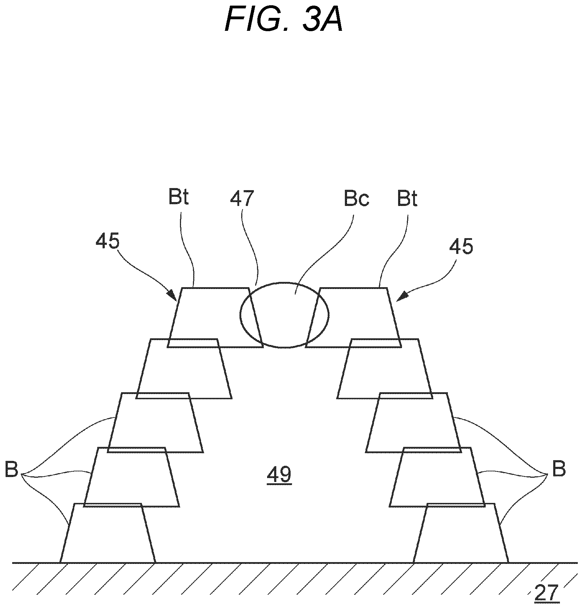

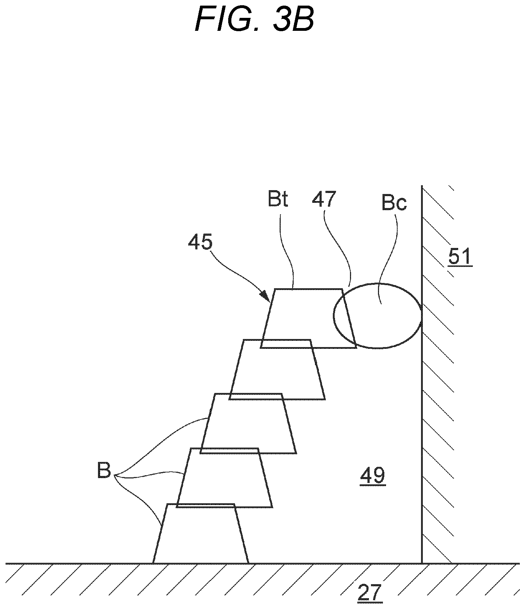

FIGS. 3A and 3B are schematic views illustrating an opening portion when a partition wall having an internal space is formed by depositing welding beads.

As illustrated in FIG. 3A, a pair of welding beads B are formed at positions separated from each other on the base 27, and new welding beads B are deposited on the respective existing welding beads B. A pair of deposited bodies 45 including a plurality of layers of welding beads B overhang so as to approach each other, and an opening portion 47 formed between welding beads Bt of uppermost layers of the deposited bodies 45 is closed with a welding bead Bc on a final path (closing path) for bead formation. Thus, an internal space 49 is formed inside the pair of deposited bodies 45. In the present specification, a shape in which the welding bead Bc and the welding beads Bt are fused is referred to as a "closed portion".

The opening portion 47 is formed between the pair of deposited bodies 45, but as illustrated in FIG. 3B, the opening portion 47 may be formed between the welding bead Bt of the uppermost layer of the deposited body 45 and a peripheral member 51 such as an existing side wall or another member.

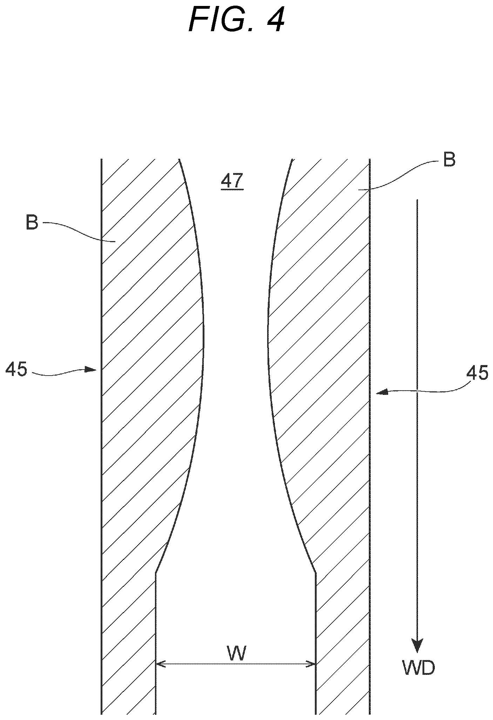

FIG. 4 is a plan view of the opening portion 47 illustrated in FIG. 3A. The actual opening portion 47 is formed such that shapes of the welding beads B of the uppermost layers of the deposited bodies 45 are not constant along a welding direction WD and have different widths W. Therefore, when deposited bodies having an internal space are formed by depositing the welding beads B, the control device 11 of this configuration closes the opening portion 47 formed in upper portions of the pair of deposited bodies deposited from a lower side with the welding bead on the closing path. At this time, the control device 11 measures a shape of the opening portion 47 before bead formation, and corrects formation conditions of the welding bead that closes the opening portion 47 according to the shape of the opening portion 47. Additive conditions of the welding bead Bc on the closing path can be set in real time during the building so as to reliably close the opening portion 47 according to the shape of the opening portion 47.

### <Procedure from Depositing of Welding Beads to Closing of Opening Portion>

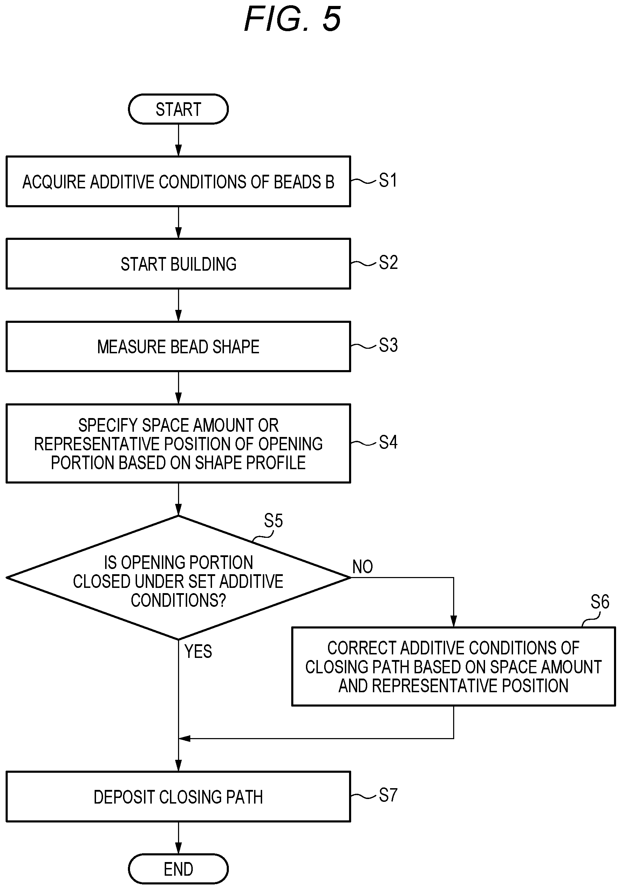

FIG. 5 is a flowchart illustrating a procedure for closing an opening portion to be formed by depositing welding beads with a welding bead on a closing path. Each procedure is performed by each unit of the control device 11 illustrated in FIG. 2.

First, the condition acquisition unit 35 acquires a design value of a bead shape and the additive conditions of the welding beads B to be deposited according to an operation of the welding torch 25 illustrated in FIG. 1 (S1). The additive conditions include information on a formation trajectory (path) of the welding bead B, welding conditions of the welding bead B, and the like when the manufactured object Wk is built with the welding beads B. The information on the additive conditions may be extracted from the manufacturing program described above.

The control device 11 drives the manufacturing unit 13 at a predetermined timing based on the acquired additive conditions to form the welding beads B and start building (S2).

Next, the profile measurement unit 37 obtains a shape profile by measuring the shape of the opening portion 47 defined between the welding beads B formed based on the additive conditions or between the welding bead B and another member (S3).

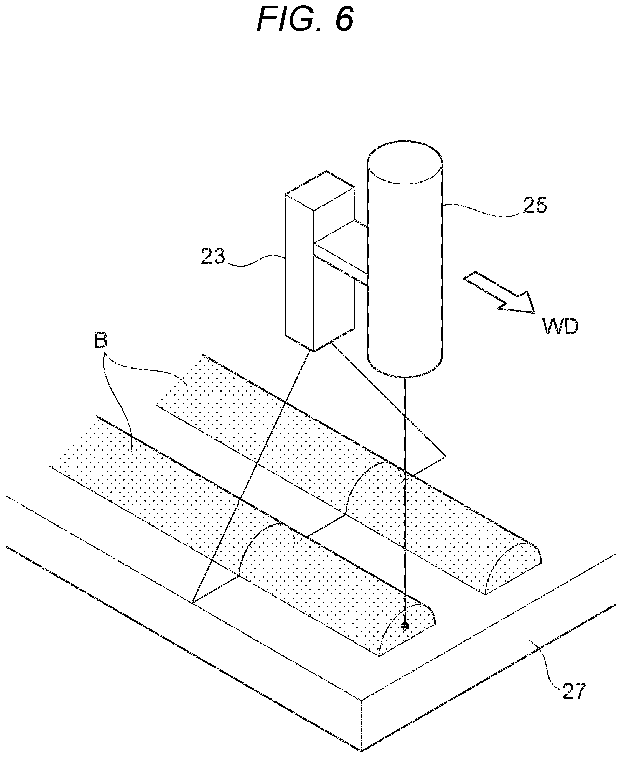

FIG. 6 is a diagram schematically illustrating a state of measuring the shape profile. The shape detection unit 23 is disposed, for example, behind the welding torch 25 in a moving direction (welding direction WD), and moves integrally with the movement of the welding torch 25. The shape detection unit 23 performs measurement based on an optical cutting method of irradiating the formed welding beads B with slit light from an oblique direction, and detecting reflected light of the irradiated slit light. The shape detection method is not limited thereto, and other methods may be used.

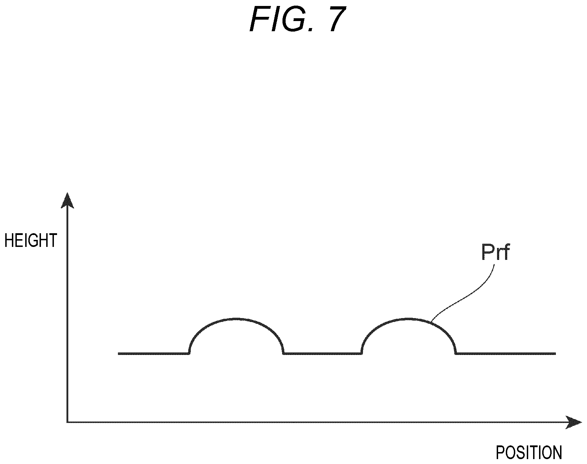

FIG. 7 is a diagram illustrating detection profiles Prf of the detected reflected light. A region protruding upward from the detection profile Prf of the reflected light indicates a position of the welding bead B. That is, the detection profile Prf of the reflected light is a shape profile indicating height information of an object to be measured.

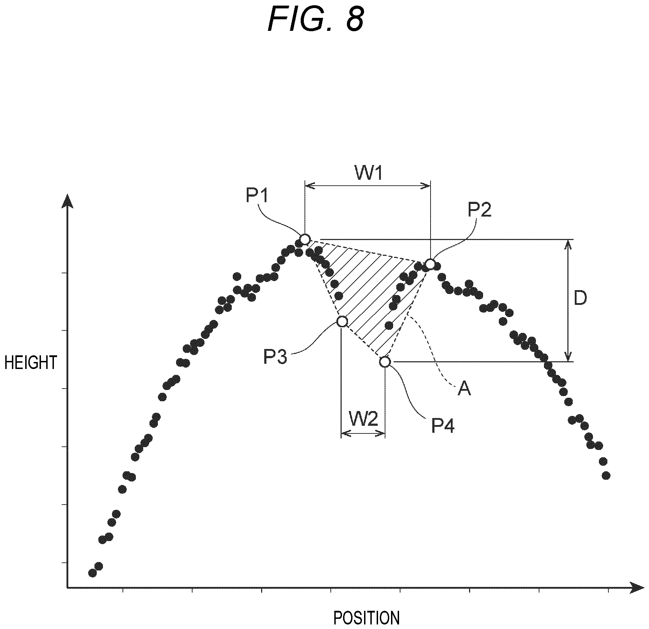

FIG. 8 is a graph illustrating a shape profile measured by the profile measurement unit 37 using the shape detection unit 23.

The shape profile includes a pair of convex portions corresponding to a pair of welding beads B (deposited bodies 45) disposed to face each other, and a region corresponding to the opening portion 47 between the pair of convex portions. That is, as illustrated in FIG. 3A, the profile measurement unit 37 measures shapes of portions of upper layers (welding beads Bt of the uppermost layer) at which the pair of deposited bodies 45 overhang and protrude most.

Here, a vertex of one of the pair of convex portions (left convex portion) is defined as a first maximum height point P1, and a vertex of the other convex portion (right convex portion) is defined as a second maximum height point P2. In addition, a point of a tip end protruding downward from the first maximum height point P1 along the opening portion is defined as a first protruding tip end point P3, and a point of a tip end protruding downward from the second maximum height point P2 along the opening portion is defined as a second protruding tip end point P4.

The arithmetic unit 39 specifies a space amount indicating a size of a space of the opening portion or a representative position of the opening portion based on the obtained shape profile (S4). Examples of the space amount include, but are not limited to, a width, a depth, and a cross-sectional area of the opening portion in a cross section orthogonal to a bead forming direction of the welding beads (welding direction WD).

For example, the width of the opening portion includes a width W1 between the first maximum height point P1 and the second maximum height point P2 (width between two points of the maximum height) and a width W2 between the first protruding tip end point P3 and the second protruding tip end point P4 (width between two points of downward protruding points). As for the depth of the opening portion, a depth D may be a difference in height between the higher one (here, P1) of the first maximum height point P1 and the second maximum height point P2 and the lower one (here, P4) of the first protruding tip end point P3 and the second protruding tip end point P4. The depth D represents a maximum depth in the opening portion of the measured shape profile. Alternatively, the depth D may be a difference between an average height of the first maximum height point P1 and the second maximum height point P2 and an average height of the first protruding tip end point P3 and the second protruding tip end point P4. A cross-sectional area A may be an area of a square having the points P1, P2, P3, and P4 as vertices, an area of a smallest circle including the points P1, P2, P3, and P4, or an area of any geometric figure having the above-described points as vertices.

The representative position is any position (coordinates) inside the geometric figure having the points P1, P2, P3, and P4 as vertices, and may be a position (coordinates) of a center point or a centroid point of the geometric figure.

Next, the determination unit 41 determines whether the opening portion 47 is closed based on at least one of a comparison between the space amount and the design value of the bead shape, a comparison between information on the representative position and a target position of the welding bead included in the additive conditions, and whether a penetration bead (details will be described later) is formed, for the closing path for closing the opening portion 47 with a welding bead to be formed based on the additive conditions (S5).

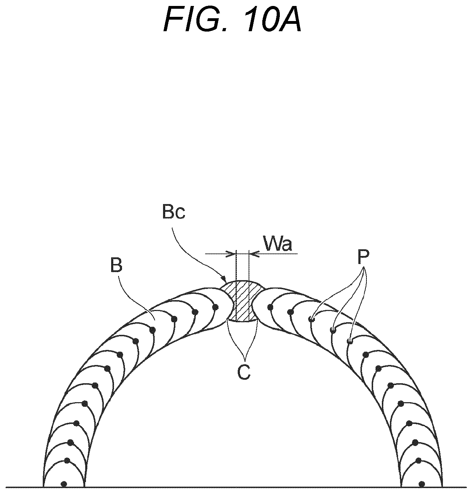

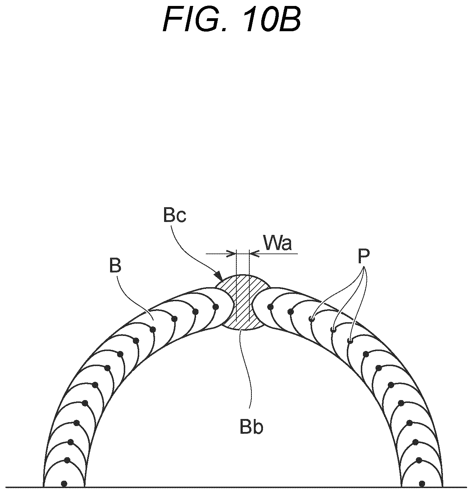

Specifically, a size of the welding bead determined based on the additive conditions or the design value of the bead shape is compared with the obtained space amount such as the width W1, the width W2, the depth D, and the cross-sectional area A of the region corresponding to the opening portion, and when a difference between the obtained space amount and the design value is larger than a predetermined threshold value, it is determined that the additive conditions of the closing path need to be corrected. In addition, the torch target position (bead formation trajectory) included in the additive conditions is compared with the representative position such as the points P1, P2, P3, and P4, the coordinates inside the geometric figure, and the coordinates of the center point or the centroid point, and when a deviation amount (difference) between the obtained representative position and the torch target position is larger than a predetermined threshold value, it is determined that the additive conditions of the closing path need to be corrected. Only one of these determinations may be performed, or both may be combined. In particular, when both are combined, the additive conditions of the welding bead on the closing path can be precisely adjusted. Further, the determination may be made by replacing whether the opening portion is closed with whether the penetration bead is formed. In this case, an inclination of the shape profile of the pair of convex portions (shape profile Prf illustrated in FIG. 7), a distance between closest points of the pair of convex portions (Wa illustrated in FIGS. 10A and 10B to be described later), or a thickness of the convex portions (for example, the depth D illustrated in FIG. 8) are compared with the design value, and it is determined that the penetration bead cannot be formed when an amount of deviation between both exceeds a predetermined value. In this way, whether the opening portion is closed can be more accurately determined by performing the determination by replacing whether the opening portion is closed with whether the penetration bead is formed. In addition, the determination of whether the opening portion 47 is closed may be performed by appropriately combining the above-described comparisons and whether the penetration bead is formed.

When the shape of the opening portion greatly deviates from a design shape and the closing path is difficult to be deposited, it may be determined whether to continue or interrupt the additive manufacturing as it is. For example, when a narrow portion is formed due to local unevenness in the opening portion, a cavity may be formed in the narrow portion when the welding bead is formed as it is. In this case, the control device 11 may control the machining device 33 illustrated in FIG. 1 at an appropriate timing to perform repair such as cutting and polishing of the narrow portion. Accordingly, a range in which the shape of the opening portion can be handled can be enlarged.

In a case in which the determination unit 41 determines that the opening portion cannot be closed or the closing state is not good even if the opening portion can be closed, the correction unit 43 corrects the additive conditions of the closing path (S6). Accordingly, the additive conditions corresponding to the actual shape of the opening portion are set for the closing path. Then, a welding bead on the closing path is formed based on the newly set additive conditions (S7).

In addition, when the determination unit 41 determines that the opening portion can be closed, the welding bead on the closing path is formed while maintaining the set additive conditions (S7).

Due to the accumulation of dripping, deformation, and the like of the welding beads deposited in each path in a lower layer of the closing path for closing the opening portion 47, the opening portion 47 may not be sufficiently closed under an initial plan, that is, the designed additive conditions. Therefore, in order to perform the building as planned, the additive conditions of the closing path are corrected according to the shape of the opening portion. Specific contents for correcting the additive conditions of the closing path will be described later.

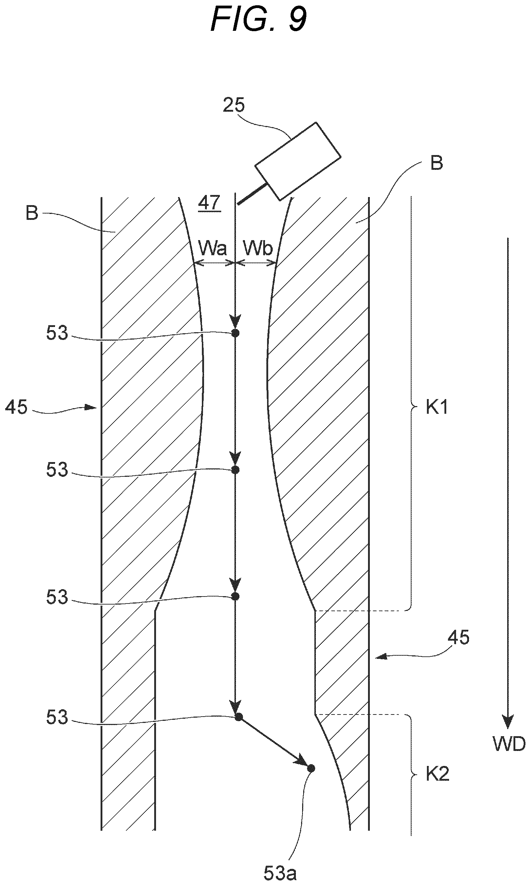

FIG. 9 is a diagram illustrating the opening portion and the closing path for closing the opening portion.

As illustrated in FIG. 9, a case is considered in which the width of the opening portion 47 does not become constant along the welding direction WD and changes. In this case, for example, in a section in which the width of the opening portion 47 is extremely narrow as in a region K1 in FIG. 9, in order to reduce a weld amount, a wire feeding speed is decreased or a travel speed is increased as compared with other sections. Conversely, in a section in which the width is wide, in order to increase the weld amount, the wire feeding speed is increased or the travel speed is decreased. In the case in which no penetration bead may be formed on a back side of a portion in which the opening portion is closed with the change of the weld amount, a mixing ratio of the shield gas may be adjusted. For example, a penetration amount of the molten metal is increased by increasing a ratio of CO2 in a mixed shield gas of Ar and CO2, and thus the penetration bead can be normally formed by adjusting the mixing ratio of the Ar-CO2 shield gas during depositing the closing path. Further preferably, the mixing ratio of the Ar-CO2 shield gas is adjusted in conjunction with any one of the change in the weld amount, the change in the heat input amount, and the change in the target position, so that it is possible to prevent the occurrence of shape failures or defects due to a closed bead.

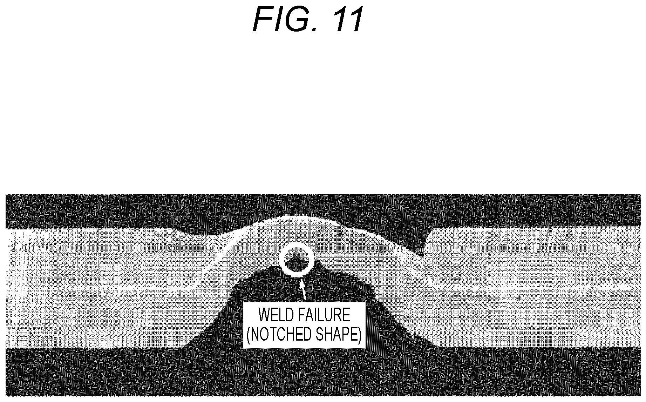

The term "penetration bead" as used herein is substantially the same as the term defined in JIS Z 3001. FIGS. 10A and 10B are diagrams of the penetration bead. FIG. 10A is a schematic cross-sectional view in a case in which no penetration bead is formed at a position of the closing path, and FIG. 10B is a schematic cross-sectional view in a case in which a penetration bead Bb is formed at the position of the closing path. The closing path is a path that fills a gap Wa between top portions of the pair of beads B deposited close to each other, and the welding bead Bc on the closing path is indicated as a hatched region. The points P in FIGS. 10A and 10B indicate target positions of bead formation. The penetration bead Bb illustrated in FIG. 10B means a welding bead having a smooth surface formed on a side (back side) opposite to a welding torch side in one-side welding in which welding is performed from only one side, and indicates a welding metal built by one path. On the other hand, when there is no penetration bead as illustrated in FIG. 10A, a situation is likely to occur in which strength decreases due to a thin thickness of a gap portion, a notched shape C may be formed between the closed portion and a bead adjacent to the closed portion and become a starting point of crack generation, and the like. FIG. 11 is a photograph of a cross section of a weld in a case in which a weld failure having a notched shape occurs in the closing path. In this way, when no penetration bead is formed in the closing path, a welding quality may deteriorate, and thus it is preferable to form the penetration bead in the closing path.

When weaving is assumed in the closing path, a weaving width of the region K1 may be smaller than that of other regions. Furthermore, in order to prevent the welding bead on the closing path from burning through after the additive, the heat input amount of the welding bead may be adjusted according to the above-described space amount. For example, when the width of the opening portion 47 is too small with respect to an assumed space amount, the welding current or the welding voltage is decreased to reduce the heat input amount, and conversely, when the width is too large, the welding current or the welding voltage is increased.

The target position of the welding torch 25 in the closing path for closing the opening portion 47 may be corrected to the representative position. For example, the target position may be corrected to a center position or a centroid position of the opening portion 47. In this way, the position of the welding torch 25 is appropriately maintained, and the target position of the welding torch and a position of a bead surface deviate from each other, so that it is possible to prevent the swing of the torch in which no welding bead is formed as expected and the interference with other members. Further, the opening portion 47 can be more reliably closed with the welding bead on the closing path.

The target position 53 of the welding torch 25 illustrated in FIG. 9 is preferably set on a line on which distances Wa and Wb from the welding beads B on both sides of the opening portion 47 are equal. However, as in a region K2 in FIG. 9, there may be a non-symmetrical section in a width direction orthogonal to the welding direction WD. In this case, the target position 53a may be added at a position biased from a center in the width direction such that the welding torch 25 is shifted in the width direction in a section of the region K2. That is, the target position 53a to be added is provided at a position biased to any one side (right side in FIG. 9) on which the opening portion 47 is widened, of a pair of opposing welding beads B that form the opening portion 47. When the target position 53a is added, the closing path is bent toward a side on which the width of the opening portion 47 is increased, and a welding bead is formed at a portion in which the width is increased. Therefore, the opening portion 47 can be closed while reducing the occurrence of the distortion, the underfill, and the unwelded portion.

As described above, according to the control method for an additive manufacturing device, when the welding beads are joined to each other, or the welding bead and another member are joined after the horizontal additive and the building in an overhang shape, it is possible to form the welding bead on the closing path for closing a joint portion under appropriate additive conditions that satisfy a space amount required for bead filling such as required width and required thickness. Accordingly, even when the size of the welding bead differs between an additive plan and an actual bead and a shape change occurs in the joint portion (opening portion 47), the additive conditions according to the shape change are automatically set, so that a joint quality of the opening portion can be improved. Accordingly, there is no difference in quality for each location, and a manufactured object with excellent strength and quality control can be obtained.

In addition, the space amount or the representative position of the opening portion between the welding beads is treated as a control feature amount, and thus as compared with a case in which a shape itself of a welding bead to be formed is treated as a feature amount, information on the required weld amount or the like becomes accurate, and the opening portion can be closed more reliably.

The present invention is not limited to the above-described embodiments, and combinations of the respective configurations of the embodiments and changes and applications made by those skilled in the art based on the description of the specification and well-known techniques are also intended for the present invention and are included in the scope of protection.

As described above, the present specification discloses the following matters.
(1) A control method for an additive manufacturing device that includes a manipulator causing a welding torch to move and that is configured to build a manufactured object by depositing welding beads to be formed at a tip end of the welding torch, the control method including:
   acquiring a design value of a bead shape and an additive condition of the welding beads to be formed by moving the welding torch;
   obtaining a shape profile including an opening portion by measuring shapes of the opening portion and a periphery of the opening portion defined between the welding beads formed based on the additive condition or between the welding bead and a peripheral member;
   specifying a space amount indicating a size of a space of the opening portion and a representative position of the opening portion according to the shape profile;
   determining whether the opening portion is closed based on at least one of a comparison between the space amount and the design value of the bead shape, a comparison between information on the representative position and a target position of the welding bead included in the additive condition, and whether a penetration bead is formed, for a closing path for closing the opening portion with a welding bead to be formed based on the additive condition; and
   correcting the additive condition of the closing path when it is determined that the opening portion is not capable of being closed by the closing path.
   According to the control method for an additive manufacturing device, the shape profile is obtained by measuring the shape of the opening portion formed by the building, and it is possible to determine whether the opening portion is closed with the closing path for closing the opening portion based on the shape profile. Therefore, when it is predicted that the opening portion cannot be closed, the closing of the opening portion can be reliably performed by correcting the additive condition of the closing path.
(2) The control method for an additive manufacturing device according to (1), in which the space amount includes one of a width, a depth, and a cross-sectional area of a region corresponding to the opening portion in the shape profile.
   According to the control method for an additive manufacturing device, the space amount such as any one of the width, the depth, and the cross-sectional area of the region corresponding to the opening portion can be easily calculated using the shape profile, and thus the correction of the additive condition can be performed more quickly. That is, it is possible to quickly execute a feedback control according to the space amount, and to shorten a processing time.
(3) The control method for an additive manufacturing device according to (1) or (2), in which the representative position is any one of points inside a geometric figure having vertices at a first maximum height point of one of a pair of convex portions sandwiching the opening portion in the shape profile, a first protruding tip end point protruding downward of the opening portion from the first maximum height point, a second maximum height point of the other convex portion, and a second protruding tip end point protruding downward of the opening portion from the second maximum height point.
   According to the control method for an additive manufacturing device, each representative position can be easily calculated using the shape profile, and thus the correction of the additive condition can be performed more quickly. That is, it is possible to quickly execute the feedback control according to the space amount, and to shorten the processing time.
(4) The control method for an additive manufacturing device according to any one of (1) to (3), in which the correction of the additive condition of the closing path includes adjusting a weld amount or a heat input amount of the welding bead that closes the opening portion according to a width of the opening portion obtained based on the shape profile.
   According to the control method for an additive manufacturing device, when the width of the opening portion is different from an assumed width, the welding bead on the closing path can be formed under appropriate conditions by adjusting the weld amount by increasing or decreasing a wire feeding speed and a travel speed, or by adjusting the heat input amount by increasing or decreasing a welding current and a welding voltage. This makes it possible to prevent too much or too little bead welding and the burn-through of a bead.
(5) The control method for an additive manufacturing device according to any one of (1) to (4), in which the correction of the additive condition of the closing path includes correcting the target position of the welding bead that closes the opening portion to the representative position.
   According to the control method for an additive manufacturing device, by correcting the target position of the welding bead on the closing path to the representative position, the position of the welding torch is appropriately maintained, and it is possible to prevent the swing of the torch and the interference with other members.
(6) The control method for an additive manufacturing device according to any one of (1) to (5), in which the correction of the additive condition of the closing path includes adding a target position of the closing path, and
   the target position to be added is biased to any one side on which the opening portion is widened, of a pair of opposing welding beads that form the opening portion.
   According to the control method for an additive manufacturing device, when the target position is added, the closing path is bent toward a side on which the width of the opening portion is increased, and a welding bead is formed at a portion in which the width is increased. Therefore, the opening portion can be closed while reducing the occurrence of the distortion, the underfill, and the unwelded portion.
(7) The control method for an additive manufacturing device according to any one of (1) to (6), in which the correction of the additive condition of the closing path includes adjusting a mixing ratio of mixed shield gas to be used for depositing the welding beads.
   According to the control method for an additive manufacturing device, by adjusting the mixing ratio of the mixed shield gas during depositing the closing path, the penetration bead can be formed normally, and it is possible to prevent a decrease in strength due to a thin thickness of a closed portion, and reduce the generation of shape failures such as the closed portion serving as a starting point of crack generation, and the generation of defects.
(8) A control device for an additive manufacturing device that includes a manipulator causing a welding torch to move and that is configured to build a manufactured object by depositing welding beads to be formed at a tip end of the welding torch, the control device including:
   a condition acquisition unit configured to acquire a design value of a bead shape and an additive condition of the welding beads to be formed by moving the welding torch;
   a profile measurement unit configured to obtain a shape profile including an opening portion by measuring shapes of the opening portion and a periphery of the opening portion defined between the welding beads formed based on the additive condition or between the welding bead and a peripheral member;
   a specifying unit configured to specify a space amount indicating a size of a space of the opening portion and a representative position of the opening portion according to the shape profile;
   a determination unit configured to determine whether the opening portion is closed based on at least one of a comparison between the space amount and the design value of the bead shape, a comparison between information on the representative position and a target position of the welding bead included in the additive condition, and whether a penetration bead is formed, for a closing path for closing the opening portion with a welding bead to be formed based on the additive condition; and
   a correction unit configured to correct the additive condition of the closing path when it is determined that the opening portion is not capable of being closed by the closing path.
   According to the control device for an additive manufacturing device, the shape profile is obtained by measuring the shape of the opening portion formed by the building, and it is possible to determine whether the opening portion is closed with the closing path for closing the opening portion based on the shape profile. Therefore, when it is predicted that the opening portion cannot be closed, the closing of the opening portion can be reliably performed by correcting the additive condition of the closing path.
(9) A program for executing a control procedure for an additive manufacturing device that includes a manipulator causing a welding torch to move and that is configured to build a manufactured object by depositing welding beads to be formed at a tip end of the welding torch, the program causing a computer to execute:
   a procedure of acquiring a design value of a bead shape and an additive condition of the welding beads to be formed by moving the welding torch;
   a procedure of obtaining a shape profile including an opening portion by measuring shapes of the opening portion and a periphery of the opening portion defined between the welding beads formed based on the additive condition or between the welding bead and a peripheral member;
   a procedure of specifying a space amount indicating a size of a space of the opening portion and a representative position of the opening portion according to the shape profile;
   a procedure of determining whether the opening portion is closed based on at least one of a comparison between the space amount and the design value of the bead shape, a comparison between information on the representative position and a target position of the welding bead included in the additive condition, and whether a penetration bead is formed, for a closing path for closing the opening portion with a welding bead to be formed based on the additive condition; and
   a procedure of correcting the additive condition of the closing path when it is determined that the opening portion is not capable of being closed by the closing path.

According to the program, the shape profile is obtained by measuring the shape of the opening portion formed by the building, and it is possible to determine whether the opening portion is closed with the closing path for closing the opening portion based on the shape profile. Therefore, when it is predicted that the opening portion cannot be closed, the closing of the opening portion can be reliably performed by correcting the additive condition of the closing path.

The present application is based on Japanese Patent Application No. 2022-106144 filed on June 30, 2022, the contents of which are incorporated herein by reference.

### REFERENCE SIGNS LIST

11: control device
13: manufacturing unit
15: manipulator
17: filler metal supply unit
17a: reel
17b: feeding mechanism
19: manipulator control unit
21: heat source control unit
23: shape detection unit
25: welding torch
27: base
29: tip end shaft
31: tool
33: machining device
35: condition acquisition unit
37: profile measurement unit
39: arithmetic unit
41: determination unit
43: correction unit
45: deposited body
47: opening portion
49: internal space
51: peripheral member
53, 53a: target position
100: additive manufacturing device
A: cross-sectional area
B, Bc, Bt: welding bead
D: depth
K1, K2: region
M: filler metal
P1: first maximum height point
P2: second maximum height point
P3: first protruding tip end point
P4: second protruding tip end point
Prf: detection profile
W, W1, W2: width
WD: welding direction
Wk: manufactured object

## Claims

1. A control method for an additive manufacturing device that includes a manipulator causing a welding torch to move and that is configured to build a manufactured object by depositing welding beads to be formed at a tip end of the welding torch, the control method comprising:
acquiring a design value of a bead shape and an additive condition of the welding beads to be formed by moving the welding torch;
obtaining a shape profile including an opening portion by measuring shapes of the opening portion and a periphery of the opening portion defined between the welding beads formed based on the additive condition or between the welding bead and a peripheral member;
specifying a space amount indicating a size of a space of the opening portion and a representative position of the opening portion according to the shape profile;
determining whether the opening portion is closed based on at least one of a comparison between the space amount and the design value of the bead shape, a comparison between information on the representative position and a target position of the welding bead included in the additive condition, and whether a penetration bead is formed, for a closing path for closing the opening portion with a welding bead to be formed based on the additive condition; and
correcting the additive condition of the closing path when it is determined that the opening portion is not capable of being closed by the closing path.

2. The control method for an additive manufacturing device according to claim 1, wherein
the space amount includes one of a width, a depth, and a cross-sectional area of a region corresponding to the opening portion in the shape profile.

3. The control method for an additive manufacturing device according to claim 1, wherein
the representative position is any one of points inside a geometric figure having vertices at a first maximum height point of one of a pair of convex portions sandwiching the opening portion in the shape profile, a first protruding tip end point protruding downward of the opening portion from the first maximum height point, a second maximum height point of the other convex portion, and a second protruding tip end point protruding downward of the opening portion from the second maximum height point.

4. The control method for an additive manufacturing device according to claim 1, wherein
the correction of the additive condition of the closing path includes adjusting a weld amount or a heat input amount of the welding bead that closes the opening portion according to a width of the opening portion obtained based on the shape profile.

5. The control method for an additive manufacturing device according to claim 1, wherein
the correction of the additive condition of the closing path includes correcting the target position of the welding bead that closes the opening portion to the representative position.

6. The control method for an additive manufacturing device according to claim 1, wherein
the correction of the additive condition of the closing path includes adding a target position of the closing path, and
the target position to be added is biased to any one side on which the opening portion is widened, of a pair of opposing welding beads that form the opening portion.

7. The control method for an additive manufacturing device according to claim 1, wherein
the correction of the additive condition of the closing path includes adjusting a mixing ratio of mixed shield gas to be used for depositing the welding beads.

8. A control device for an additive manufacturing device that includes a manipulator causing a welding torch to move and that is configured to build a manufactured object by depositing welding beads to be formed at a tip end of the welding torch, the control device comprising:
a condition acquisition unit configured to acquire a design value of a bead shape and an additive condition of the welding beads to be formed by moving the welding torch;
a profile measurement unit configured to obtain a shape profile including an opening portion by measuring shapes of the opening portion and a periphery of the opening portion defined between the welding beads formed based on the additive condition or between the welding bead and a peripheral member;
a specifying unit configured to specify a space amount indicating a size of a space of the opening portion and a representative position of the opening portion according to the shape profile;
a determination unit configured to determine whether the opening portion is closed based on at least one of a comparison between the space amount and the design value of the bead shape, a comparison between information on the representative position and a target position of the welding bead included in the additive condition, and whether a penetration bead is formed, for a closing path for closing the opening portion with a welding bead to be formed based on the additive condition; and
a correction unit configured to correct the additive condition of the closing path when it is determined that the opening portion is not capable of being closed by the closing path.

9. A program for executing a control procedure for an additive manufacturing device that includes a manipulator causing a welding torch to move and that is configured to build a manufactured object by depositing welding beads to be formed at a tip end of the welding torch, the program causing a computer to execute:
a procedure of acquiring a design value of a bead shape and an additive condition of the welding beads to be formed by moving the welding torch;
a procedure of obtaining a shape profile including an opening portion by measuring shapes of the opening portion and a periphery of the opening portion defined between the welding beads formed based on the additive condition or between the welding bead and a peripheral member;
a procedure of specifying a space amount indicating a size of a space of the opening portion and a representative position of the opening portion according to the shape profile;
a procedure of determining whether the opening portion is closed based on at least one of a comparison between the space amount and the design value of the bead shape, a comparison between information on the representative position and a target position of the welding bead included in the additive condition, and whether a penetration bead is formed, for a closing path for closing the opening portion with a welding bead to be formed based on the additive condition; and
a procedure of correcting the additive condition of the closing path when it is determined that the opening portion is not capable of being closed by the closing path.
